# EUROPEAN PATENT SPECIFICATION

(11) **EP 3 914 843 B1**
(45) Date of publication and mention of the grant of the patent: **04.06.2025**
(21) Application number: 20708700.8
(22) Date of filing: 27.01.2020
(51) Int. Cl.: F16K 37/00

(54) **ABNORMAL CONDITION DETECTION OF SHUT DOWN VALVES AND BLOW DOWN VALVES**
ERKENNUNG EINES ABNORMEN ZUSTANDS VON ABSPERRVENTILEN UND ABBLASVENTILEN
DÉTECTION DE CONDITION ANORMALE DE VANNES D'ARRÊT ET DE VANNES DE PURGE

(30) Priority: 25.01.2019 NO 20190092
(43) Date of publication of application: 01.12.2021
(73) Proprietor: IDEATION AS, 4072 Randaberg (NO)
(72) Inventor: DYRDAL, Knut Are, 5397 Bekkjarvik (NO); ROALD, Arne Ole, 1358 Jar (NO)
(74) Representative: AWA Norway AS
(86) International application number: PCT/NO2020/050013
(87) International publication number: WO 2020/153853

(56) References cited:
- EP-A1- 1 859 184
- EP-A1- 2 180 304
- EP-A2- 0 462 432
- EP-B1- 1 859 184
- WO-A1-2017/112918
- WO-A1-2018/193060
- US-A- 5 616 829
- US-A1- 2010 152 907
- US-A1- 2012 259 559
- US-A1- 2015 362 090
- US-A1- 2017 307 104

## Description

### FIELD OF THE INVENTION

The present invention relates to the monitoring of changes in stiction, wear and tear and the presence of leaks which will influence functional safety of Shut Down Valves and Blow Down Valves.

### BACKGROUND

A Shutdown Valve, SDV, also referred to as Process Shutdown Valve, PSDV or Emergency Shutdown Valve, ESDV or ESV, is an actuated valve designed to stop the flow of a hazardous fluid upon the detection of a dangerous event. Blow Down Valves (BDV's) are designed to depressurize a process system in case of a detected hazardous situation on the plant.

BDV's are shut in normal operations and must have high integrity for opening when a process blow-down is required. Both SDV's and BDV's provide protection against possible harm to people, environment and the investments. SDV's and BDV's form part of a Safety Instrumented System. The process of providing automated safety protection upon the detection of a hazardous event is called Functional Safety.

SDV's and BDV's are primarily associated with the oil and gas industry, although other industries may also require this type of protection system.

In a process plant in operation, both SDV's and BDV's are "static" valves, which stay in one position until a hazardous condition occurs, where an automated shut down is required and the SDV's all closes, and/or a process depressurisation is required and the BDV's all open.

SDV's and BDV's are typically high-recovery valves that lose little energy due to low flow turbulence. Flow paths are straight through. As SDV's and BDV's form part of an automated safety instrumented system it is necessary to operate the valve by means of an actuator. These actuators are normally fail-safe with either a pneumatic cylinder or a hydraulic cylinder.

In addition to the fluid type, actuators also vary in the way energy is stored to operate the valve on demand such as single-acting cylinder with spring return where the energy is stored by means of a compressed spring. Another type is double-acting cylinder, where the "fail safe" energy is stored using a volume of compressed fluid from external accumulators.

The type of actuation required depends upon the application (pressure and flow), site facilities and the physical space available, although the majority of actuators for smaller SDV's and BDV's are of the spring return type due to the failsafe nature of spring return systems, while larger valves may have hydraulic double-acting actuators with separate hydraulic accumulators for back-up power to make up the failsafe requirement.

SDV's and BOV's are used in a variety of industrial applications to safeguard process equipment for exposure of internal pressures exceeding the equipment design pressure. One industrial application where SDV's and BDV's are used is within the oil and gas industry. Consequences of a fault on any one shutdown valve ranges from hazardous explosions and fire to releases of hydrocarbon and other toxic gases to the atmosphere.

Maintenance of SDV's and BDV's are of major importance to the economy in the operation. In the maintenance context, it is distinguished between (REF. NORSOK Z008 and others): "corrective maintenance" where the equipment is run to failure, "preventive maintenance" where maintenance of the equipment is performed at pre-defined (planned) intervals and "condition-based maintenance" where maintenance is performed based on measurements of equipment condition and performance.

SDV's and BDV's are normally maintained on predefined intervals in the class of "preventive maintenance". Reducing maintenance time and costs associated with maintaining SDV's and BDV's can have a large impact on the plant maintenance cost.

For SDV's and BDV's used in safety instrumented systems it is essential to know that the valve can provide the required level of safety performance and that the valve will operate on demand. The required level of performance is dictated by the Safety Integrity Level (SIL). In order to adhere to this level of performance it is necessary to test the valve.

There are 2 types of testing methods available, namely:
Proof test - A manual test that allows the operator to determine whether the valve is in "as good as new" condition by testing for all possible failure modes. This will require a plant shutdown.
Diagnostic test - An automated on-line test that will detect a percentage of the possible failure modes of the shutdown valve. An example of this for a shutdown valve would be a partial stroke test, which is a technique used in a control system to allow the user to test a percentage of the possible failure modes of a shutdown valve without the need to physically close the valve.

Partial stroke test is used to assist in determining that the safety function will operate on demand by moving the valve some degree from open or closed at specified time intervals. The idea is to test the valve without interrupting the process. However, the test measures actuator pressure and time and is therefore only an indirect measure of valve movement related to stiction of the shutdown valve.

Partial stroke testing introduces additional components directly connected to the hydraulic/pneumatic actuator system of the shutdown valve adding components and complexity, which may reduce the probability of failure on demand which is an essential measure for a safety system and not a replacement for the need to fully stroke valves, as proof testing is still a mandatory requirement.

Other systems for automated online monitoring of SDV's and BDV's include continuous online monitoring connected to the plant monitoring system, which create a huge amount of data to be analysed and evaluated, which has proven to create costly installations and require specialised personnel to maintain and extract the data for the PSV maintenance process.

One obvious opportunity for test of SDV's and BDV's integrity is unplanned plant shutdowns, caused by equipment, instrument or human failure or caused by a real hazardous situation such as a fire or gas leak on the plant.

However, due to the nature of the shutdown and the need to bring the plant back to normal production, testing SDV's and BDV's in this operational transient, unplanned situations are complicated tasks which need special equipment, which is not readily available on the market or far too expensive to install using existing instrument systems.

US5616829A discloses a prior art system for detecting abnormal operation conditions in a shutdown valve.

### SUMMARY

It is an object of the invention to provide a system and method to detect abnormal operating conditions which will influence functional safety of Shut Down Valves (SDV's) or Blow Down Valves (BOV's) by monitoring valve performance as part of the normal operation of the plant, which also include spurious process shutdowns.

It is further an object of the invention to provide a method and system in order to reduce maintenance work and operating cost for the SDV's. The invention is thus defined by a system for detecting abnormal operating conditions in a shutdown valve according to claim 1 and the corresponding method as defined in claim 9.

### Stiction;

It is further an object of the invention to provide a method and a system to measure stiction of the valve when it is activated by any spurious process shutdown where the valve control system moves the SDV from open to closed or from closed to open position.

### Check of leak and leak flow rate;

It is further an object of the invention to provide a method and system to determine when the SDV deviates from the acceptable operating specification by leaking process medium and to quantify the leak rate per unit time when the SDV is closed.

A further object of the invention is to provide a method and system to determine when the SDV's deviate from the acceptable operating specification by valve leakage in closed position and to quantify the leak rate per unit time.

Yet a further object of the invention is to generate, and store defined abnormal condition messages in real time in the local predictor microcontroller and to transmit the messages wireless as required by external operational data systems.

These objects are achieved with the method and system of the disclosed invention as set forth in the appended claims.

### BRIEF DESCRIPTION OF THE DRAWINGS

The invention will now be described in more detail and with reference to the appended claims in which:
Fig.1, shows a communication system.
Fig.2, shows the placement of the sensors and processors.
Fig.3, shows the first predictor (20) data flow chart for detection of stiction, wear and tear and actuator degradation.
Fig.4, shows second predictor (40) data flow chart for detection of valve leak.

### DETAILED DESCRIPTION OF THE INVENTION

At least one embodiment of the present invention is described below in reference to operation of a Shut Down Valve (SDV) within an oil and gas production plant. However, it should be apparent to those skilled in the art and guided by the teaching herein that the present invention is likewise applicable to any Emergency Shutdown Valve (ESDV) and any, Blow Down Valve (BDV) in any industrial facility that may employ SDV's, ESDV's or BDV's.

A non-exhaustive listing of possible industrial facilities that employ SDV'S, ESDV's or BDV's and that need to monitor such valves includes power generation plants, chemical facilities and electrical facilities. Those skilled in the art will further recognize that the teaching herein is suited to other applications in addition to industrial settings such as for example military, commercial and residential applications.

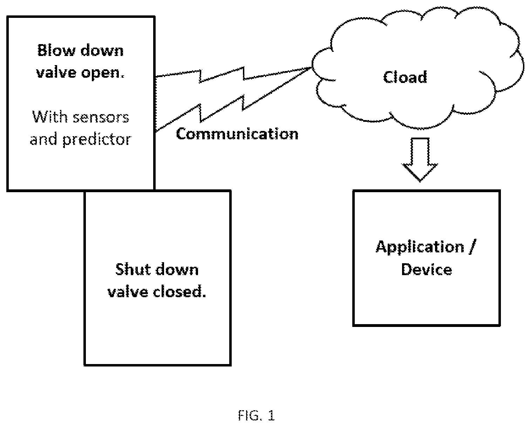

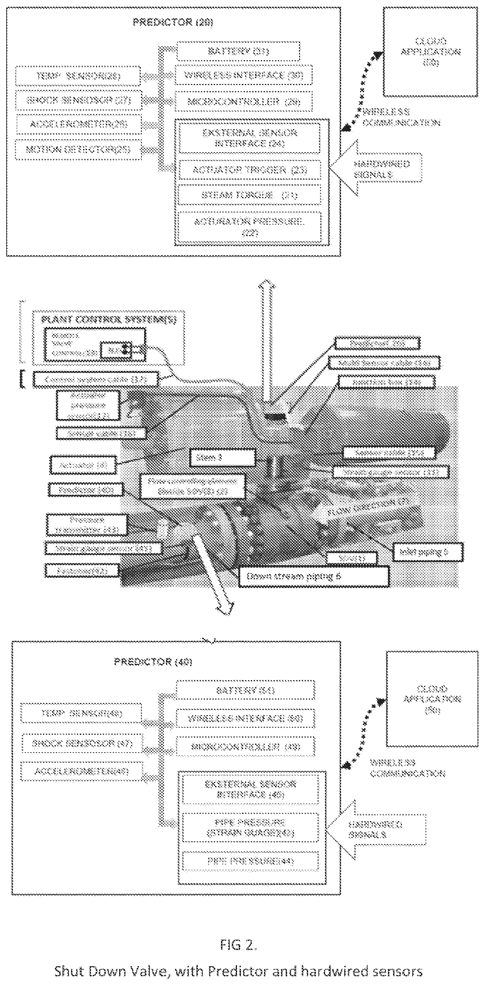

Referring to the drawings, FIG. 1 is a schematic illustration of a Shut Down Valve and a Blow Down Valve with monitoring system for abnormal situation detection depicting the communication as a generic symbol, achieved either over a Wi-Fi network, Bluetooth protocol, SMS protocol (a cloud, dedicated application or a handheld device), or any other applicable method according to one embodiment of the present invention. SDV's and/or BDV's with sensors and the Predictors are able to communicate with different recipients. Referring to the drawing FIG. 2, shows the details of at least one SDV 1 with a first detector system comprising at least one first predictor **20** intended to record if the SDV's ,flow-controlling element **2** sticks in closed or open valve position, also including:
- a motion sensor **25** detecting rotational motion of the stem **3** to evaluate the degree of friction in said flow-controlling element **2**, and
- an accelerometer sensor **26** detecting rotational acceleration of the stem **3** to evaluate the degree of friction in the flow-controlling element **2,** and/or
- a shock sensor **27** detecting shock movement and/or ultrasonic vibration through the stem **3** and
- a first microcontroller **29** controlling sensor data from the sensors **11, 12, 25, 26, 27,** determining stiction of the said flow-controlling element **2,** and
- a first wireless interface **30** sending data emitting from said first microcontroller **29.**

The said predictor **20** is fixed on top of the stem **3** and when the actuator **4** is activated, the flow- controlling element **2** move between open and closed position.

A second detector system comprising at least one second predictor **40** configurated to record and estimate leakage of the SDV's flow-controlling element **2** in closed position, is fixed to at least one downstream inlet pipe **5** and a downstream outlet pipe **6** on the said SDV **1,** also including
- a temperature sensor **48** detecting temperature in flow fluid, and/or
- a second shock sensor **47** detecting shock movement in pipe **6,** and/or
- a second vibration sensor **46** detecting ultrasonic vibrations in the flow-controlling element **2,** and/or
- a second microcontroller **49** controlling the sensor data from the sensors **41, 46, 47, 48,** determining flow rate, and
- a second wireless interface **50** sending the data coming from said second microcontroller **49.**

And where the second detector system also including at least one fastener **42** with at least one strain gauge sensor **41** is clamped to the downstream pipe **6** with the said fastener, where the pressure in the downstream pipe **6** expands the downstream pipe **6** and thereby increases the strain in the fastener **42** and the strain gauge sensor **41,** and the measured strain that is proportional to the pressure in the downstream pipe **6** and/or at least one pressure sensor **43** which may be of piezoceramic type is installed in the downstream pipe **6** which also measures the pressure in the said downstream piping.

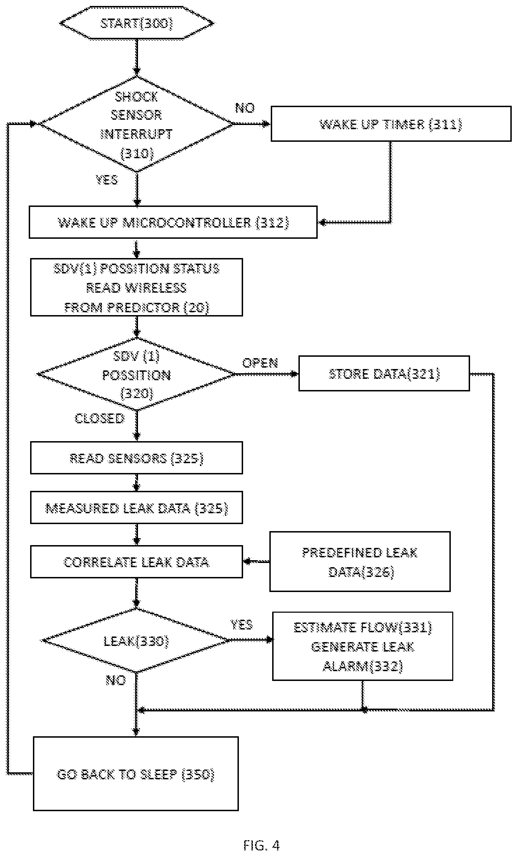

Where the said sensors **41** and **43** are wired onto the external sensor interface **45** which is controlled by the microcontroller **49** and measured as pipe pressure strain gauge **43** and pipe pressure **44,** when the said microcontroller **49** wakes up from sleep mode as described in the flow chart FIG. 4.

Referring to FIG. 4, which illustrates the program steps for the said microcontroller **49,** where START **300** is the initial sleep mode state of the microcontroller **49,** and the at least one shock sensor **47** is installed in the Predictor **40** or at least one piezoelectric pressure sensor **43** is detecting sufficient ultrasonic vibrations energy transmitted from the downstream pipe **6** to generate an activation signal **310.**

Where the microcontroller **49** wake-up **312,** and communicate through the wireless interface **50** with the predictor **20** and receives the valve position data **320** for SDV **1,** and if the flow-controlling element **2** is open, the program store the data with time **321** and goes back to sleep **350,** but if the valve position **320** is closed the microcontroller **49** read and compute sensor data **325** from at least one of the said sensors **41, 43, 47,** and accelerometer **46** and temperature sensor **48.**

The microcontroller **49** then correlates the measured leak data **325** with a pre-defined leak data **326** and if the measured leak data **326** conforms with the pre-defined leak data **326,** a leak is detected **330** and a leak flow is estimated **331** and a leak alarm **332** is generated and stored with real time and SDV **1** specific information in the microcontroller **49,** and the microcontroller **49** can go back to sleep **350.**

If the measured leak data **325** does not compare to a predefined leak data **326,** no leak data is stored and the microcontroller **49** can go back to sleep **350** and wait for the above sequence from **312** to sleep **350** to be repeated by either the interrupt of the shock sensor **310** or wake-up call set by operational procedures to typically between 1 hour to 24 hours in the wake up timer **311.**

Or where the predictor **20** intended to record if the flow-controlling element **2** sticks in closed or open valve position or where the said SDV is worn by wear and tear, where a plant-control system energizes or de-energizes the hydraulic or pneumatic pressure in the actuator **4** monitored by the actuator pressure sensor **12** and the movement of the actuator **4** turns the stem **3** to open or close the flow-controlling element **2.**

The plant-control system while energizing or de-energizing the hydraulic or pneumatic pressure in the actuator **4,** intermittently closes a normally open contact valve control **13** and where at least one strain gauge sensor **11** measures the dynamic force induced on the flow controlling element **2** by the rotational torque generated by the actuator **4** and where the sensor cable **15** from strain gauge sensor **11** and the sensor cable **16** from actuator pressure sensor **12** and the sensor cable **17** from remote valve control **13** may be connected in junction box **14** and wired through multi-sensor cable **18** or alternatively sensor cable **15, 16** and/or **17** be connected to the predictor **20.**

External sensor interface **24** which is controlled by the microcontroller **29,** will read the signal from the strain gauge sensor **11** and detect the stem torque **21** and the signal from the actuator pressure sensor **12** to the actuator pressure **22** and the signal from the remote valve control **13** to the actuator trigger **23.**

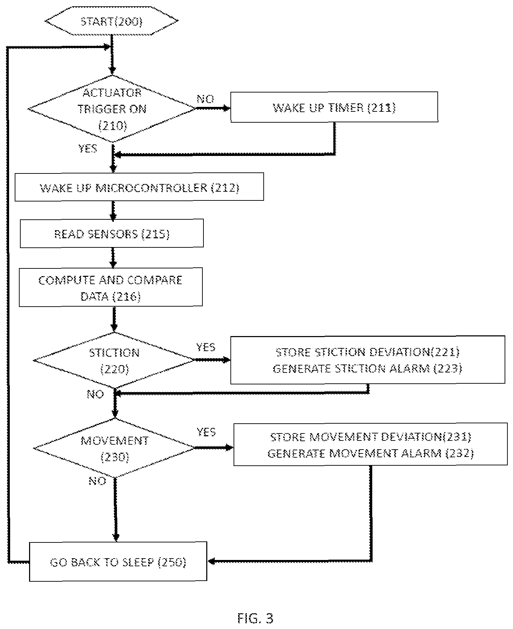

And where a change of state in at least one actuator triggers **23** awake the microcontroller **29** to wake- up from sleep mode which is further described in the flow chart in FIG 3, which illustrates the program steps for the said microcontroller **29,** where START **200** is in the initial sleep mode state of the microcontroller **29** and at least one actuator trigger **210** generate an activation signal where the microcontroller **29** wake up **212** and reads sensor data **215** from the sensors **11** and **12,** motion sensor **25,** accelerometer sensor **26,** shock sensor **27** and temperature sensor **28.** And microcontroller **29** transmit said sensor signals through the wireless interface **30** through the wireless interface **50** to the microcontroller **49** which then reads computed sensor data **325** from at least one of the said sensors **41, 43, 47,** accelerometer sensor **46** and temperature sensor **48** and then the microcontroller **49** correlate the measured leak data **325** with a pre-defined leak data **326.** If the measured leak data **326** conforms with the pre-defined leak data **326** a leak is detected **330** and a leak flow is estimated **331** and a leak alarm **332** generated and data is stored with real time. The SDV **1** specific information is stored in the microcontroller **49,** and the microcontroller **49** can go back to sleep **350.**

If the measured leak data **325** does not compare to a pre-defined leak data **326,** no leak data is stored and the microcontroller **49** can go back to sleep **350** and wait for the above sequence from **312** to **350** to be repeated by either the interrupt of the shock sensor **310** or wake-up call set by operational procedures to typically between 1 hour to 24 hours in the wake-up timer **311** and the microcontroller **29** reads sensor data **215** from at least one of the said sensors **11, 12, 25, 26, 27** and **28.**

The microcontroller **29** then compute the measured stiction data **216** and compare with the pre-defined acceptable stiction data **220** which define the conditions for acceptable stiction in SDV **1** and therefore if correlation of stiction data **221** is outside acceptable limits, stiction deviation data **222** is stored and a stiction alarm **223** is generated and stored with real time SDV **1** specific information in the microcontroller **29.**

If the measured stiction data **216** does not compare to a pre-defined stiction data set **220** no stiction deviation is detected and the microcontroller **29** compute the measured movement data set **217** and compare with the pre-defined acceptable movement data **230** which defines the conditions for acceptable movement of the flow-controlling element **2** and therefore if correlation of movement data **231** is out of acceptable limits due to wear and tear or other actuator problems, movement deviation data **231** is stored and a movement alarm **223** is generated and stored with real time and SDV **1** specific information in the microcontroller **29.**

If the measured movement data **217** does not compare to a pre-defined movement data **230** no movement deviation is detected and the microcontroller **29** goes back to sleep **350** and wait for the above sequence from wake-up timer **212** to sleep-mode **250** to be repeated by either the interrupt of the actuator trigger **210** or wake-up call set by operational procedures, typically between 1 hour to 24 hours in the wake-up timer **211**.

## Claims

1. A system for detecting abnormal operating conditions in a shutdown valve, the system including a shutdown valve (SDV 1) with an inlet pipe (5), an outlet pipe (6), a flow-controlling element (2) located between said inlet and outlet pipes, a stem (3) connected to the flow-controlling element (2) driven by an actuator arrangement (4),
wherein the system further includes a first detector system for detecting stiction of the flow-controlling element (2), including a first predictor (20) connected to the stem (3), with an accelerometer sensor (26) detecting rotational acceleration of the stem (3) and
a motion sensor (25) detecting rotational motion of the stem (3), the first predictor detecting the position of the flow-controlling element (2) transferred through the stem (3), and
a second detector system for detecting a leak in the flow-controlling element (2), including a second predictor (40) for detecting vibrations in the flow-controlling element (2).

2. A system according to claim 1, wherein the second predictor (40) is connected to the outlet pipe (6).

3. A system according to claim 1, wherein the first predictor (20) includes:
- a shock sensor (27) detecting shock movement and/or ultrasonic vibration through the stem (3),
- a first microcontroller (29) controlling sensor data from the sensors (25, 26, 27), and
- a first wireless interface (30) sending data coming from said first microcontroller (29).

4. A system according to claim 1, wherein the second predictor (40) includes:
- a temperature sensor (48) detecting temperature in fluid flow, and/or
- a second shock sensor (47) detecting shock movement and/or ultrasonic vibrations in the outlet pipe (6), and/or
- a second vibration sensor (46) detecting vibrations in the flow-controlling element (2), and/or
- a second microcontroller (49) controlling sensor data from the sensors (41, 46, 47, 48), and
- a second wireless interface (50) sending data emitting from said second microcontroller (49).

5. A system according to claim 1, further including a strain gauge sensor (11) detecting dynamic force induced on the stem (3).

6. A system according to claim 1, further including an actuator pressure sensor (12) detecting hydraulic pressure in the actuator (4) when in operation.

7. A system according to claim 1, further including a strain gauge sensor (41), clamped with a fastener (42) on the wall of said outlet pipe, detecting strain in the fastener proportional to pressure.

8. A system according to claim 1, further including a second pressure sensor (43) located on the outlet side of the flow-controlling element (2) detecting fluid pressure in the outlet pipe.

9. A method for detecting abnormal operating conditions in the system of claims 1-8, including:
- detecting stiction of the flow-controlling element (2) by detecting the position of the flow controlling element (2) transferred through the stem (3), wherein the first predictor includes an accelerometer sensor (26) detecting rotational acceleration of the stem (3) as well as the motion sensor (25) detecting rotational motion of the stem (3), and
- detecting a leak in the flow-controlling element (2) by detecting vibrations in the flow-controlling element.

10. A method according to claim 9, wherein the first microcontroller (29) reading sensor signals (215) coming from said first shock sensor (27), said first accelerometer sensor (26), said first motion sensor (25), said actuator pressure sensor (12), and said strain gauge sensor (11), computes and compares (216) sensor data for detecting possible stiction and/or deviation of acceptable movement and sending said sensor data from said first transmitter (30) wherein,
i. if deviation of stiction (220) of the flow-controlling element (2) is computed, a stiction alarm is generated (223), and
ii. stiction deviation data is stored (221) and /or
iii. if no said deviation of stiction (220) is computed, and
deviation of movement (230) of the flow-controlling element (2) is computed, a movement alarm (232) is generated and
iv. movement deviation data is stored (231) and/or
v. if no said deviation of movement (230) is computed, the system goes to sleep mode (250).

11. A method according to claim 9, wherein an actuator trigger signal (210) coming from said predictor (20) wake-up (212) the first microcontroller (29).

12. A method according to claim 9, wherein a wake-up timer (211) is adapted to wake up (212) the first microcontroller (29).

13. A method according to claim 9, wherein the first microcontroller (29) in predictor (20) communicates the said valve position data (320) for said flow-controlling element (2) to second microcontroller (49), wherein:
i. if the position (320) of the flow controlling element (2) indicates that the valve is open, data is stored (321), or
ii. if position (320) of the flow controlling element (2) indicates that the valve is closed, the second microcontroller reads sensor data (323) from the temperature sensor (48), said second shock sensor (47), said second vibration sensor (46), the strain gauge sensor (41), the second pressure sensor (43) which is measuring leak data (325) and where said measured leak data (325) is computed and correlated with pre-defined leak data (326) and
iv. leak flow (331) is estimated and
v. leak alarm (332) is generated and
vi. data is stored (321) and
vii. system goes back to sleep mode (250).

14. A method according to claim 13, wherein a shock sensor signal (310) coming from a second shock sensor (47) is waking up (312) the second microcontroller (49).

15. A method according to claim 13, wherein a wake-up timer (311) is adapted to wake-up second microcontroller (49).

## Patentansprüche

1. System zum Detektieren anormaler Betriebsbedingungen in einem Abschaltventil, wobei das System ein Abschaltventil (SDV 1) mit einer Einlassleitung (5), einer Auslassleitung (6), einem zwischen der Einlass- und der Auslassleitung angeordneten Strömungssteuerelement (2), einem mit dem Strömungssteuerelement (2) verbundenen Schaft (3), der durch eine Aktuatoranordnung (4) angetrieben wird, umfasst,
wobei das System ferner Folgendes umfasst
ein erstes Detektorsystem zum Detektieren einer Haftreibung des Strömungssteuerelements (2), das einen mit dem Schaft (3) verbundenen ersten Prädiktor (20) mit einem Beschleunigungsmesssensor (26), der eine Drehbeschleunigung des Schafts (3) detektiert, und einem Bewegungssensor (25), der eine Drehbewegung des Schafts (3) detektiert, umfasst, wobei der erste Prädiktor die durch den Schaft (3) übertragene Position des Strömungssteuerelements (2) detektiert, und
ein zweites Detektorsystem zum Detektieren eines Lecks in dem Strömungssteuerelement (2), das einen zweiten Prädiktor (40) zum Detektieren von Schwingungen in dem Strömungssteuerelement (2) umfasst.

2. System nach Anspruch 1, wobei der zweite Prädiktor (40) mit der Auslassleitung (6) verbunden ist.

3. System nach Anspruch 1, wobei der erste Prädiktor (20) Folgendes umfasst:
- einen Stoßsensor (27), der eine Stoßbewegung und/oder eine Ultraschallschwingung durch den Schaft (3) detektiert,
- eine erste Mikrosteuerung (29), die Sensordaten von den Sensoren (25, 26, 27) steuert, und
- eine erste drahtlose Schnittstelle (30), die von der ersten Mikrosteuerung (29) kommende Daten sendet.

4. System nach Anspruch 1, wobei der zweite Prädiktor (40) Folgendes umfasst:
- einen Temperatursensor (48), der eine Temperatur in einer Fluidströmung detektiert, und/oder
- einen zweiten Stoßsensor (47), der eine Stoßbewegung und/oder Ultraschallschwingungen in der Auslassleitung (6) detektiert, und/oder
- einen zweiten Schwingungssensor (46), der Schwingungen in dem Strömungssteuerelement (2) detektiert, und/oder
- eine zweite Mikrosteuerung (49), die Sensordaten von den Sensoren (41, 46, 47, 48) steuert, und
- eine zweite drahtlose Schnittstelle (50), die von der zweiten Mikrosteuerung (49) emittierte Daten sendet.

5. System nach Anspruch 1, das ferner einen Dehnungsmesssensor (11) umfasst, der eine auf den Schaft (3) induzierte dynamische Kraft detektiert.

6. System nach Anspruch 1, das ferner einen Aktuatordrucksensor (12) umfasst, der den Hydraulikdruck in dem Aktuator (4) im Betrieb detektiert.

7. System nach Anspruch 1, das ferner einen mit einem Befestigungselement (42) auf die Wand der Auslassleitung geklemmten Dehnungsmesssensor (41) umfasst, der eine Dehnung in dem Befestigungselement proportional zum Druck detektiert.

8. System nach Anspruch 1, das ferner einen auf der Auslassseite des Strömungssteuerelements (2) angeordneten zweiten Drucksensor (43) umfasst, der einen Fluiddruck in der Auslassleitung detektiert.

9. Verfahren zum Detektieren anormaler Betriebsbedingungen in dem System nach den Ansprüchen 1-8, das Folgendes umfasst:
- Detektieren einer Haftreibung des Strömungssteuerelements (2) durch Detektieren der durch den Schaft (3) übertragenen Position des Strömungssteuerelements (2), wobei der erste Prädiktor einen Beschleunigungsmesssensor (26), der eine Drehbeschleunigung des Schafts (3) detektiert, sowie den Bewegungssensor (25), der eine Drehbewegung des Schafts (3) detektiert, umfasst, und
- Detektieren eines Lecks in dem Strömungssteuerelement (2) durch Detektieren von Schwingungen in dem Strömungssteuerelement.

10. Verfahren nach Anspruch 9, wobei die erste Mikrosteuerung (29), die von dem ersten Stoßsensor (27), dem ersten Beschleunigungsmesssensor (26), dem ersten Bewegungssensor (25), dem Aktuatordrucksensor (12) und dem Dehnungsmesssensor (11) kommende Sensorsignale (215) ausliest, Sensordaten berechnet und vergleicht (216), um eine mögliche Haftreibung und/oder Abweichung einer akzeptablen Bewegung zu detektieren und die Sensordaten von dem ersten Sender (30) zu senden, wobei,
i. wenn eine Abweichung der Haftreibung (220) des Strömungssteuerelements (2) berechnet wird, ein Haftreibungsalarm (223) erzeugt wird, und
ii. Haftreibungsabweichungsdaten gespeichert (221) werden und/oder
iii. wenn keine Abweichung der Haftreibung (220) berechnet wird, und
eine Abweichung einer Bewegung (230) des Strömungssteuerelements (2) berechnet wird, ein Bewegungsalarm (232) erzeugt wird und
iv. Bewegungsabweichungsdaten gespeichert (231) werden und/oder
v. wenn keine Abweichung einer Bewegung (230) berechnet wird, das System in einen Schlafmodus (250) übergeht.

11. Verfahren nach Anspruch 9, wobei ein von dem Prädiktor (20) kommendes Aktuatorauslösesignal (210) die erste Mikrosteuerung (29) aufweckt (212).

12. Verfahren nach Anspruch 9, wobei ein Aufweckzeitgeber (211) dazu ausgelegt ist, die erste Mikrosteuerung (29) aufzuwecken (212).

13. Verfahren nach Anspruch 9, wobei die erste Mikrosteuerung (29) in dem Prädiktor (20) die Ventilpositionsdaten (320) für das Strömungssteuerelement (2) an die zweite Mikrosteuerung (49) kommuniziert, wobei:
i. wenn die Position (320) des Strömungssteuerelements (2) anzeigt, dass das Ventil geöffnet ist, Daten gespeichert (321) werden, oder
ii. wenn die Position (320) des Strömungssteuerelements (2) anzeigt, dass das Ventil geschlossen ist, die zweite Mikrosteuerung Sensordaten (323) von dem Temperatursensor (48), dem zweiten Stoßsensor (47), dem zweiten Schwingungssensor (46), dem Dehnungsmesssensor (41), dem zweiten Drucksensor (43), der Leckdaten (325) misst, ausliest und wobei die gemessenen Leckdaten (325) berechnet und mit vordefinierten Leckdaten (326) korreliert werden und
iv. eine Leckströmung (331) geschätzt wird und
v. ein Leckalarm (332) erzeugt wird und
vi. Daten gespeichert (321) werden und
vii. das System in den Schlafmodus (250) zurückkehrt.

14. Verfahren nach Anspruch 13, wobei ein von einem zweiten Stoßsensor (47) kommendes Stoßsensorsignal (310) die zweite Mikrosteuerung (49) aufweckt (312).

15. Verfahren nach Anspruch 13, wobei ein Aufweckzeitgeber (311) dazu ausgelegt ist, die zweite Mikrosteuerung (49) aufzuwecken.

## Revendications

1. Système de détection de conditions de fonctionnement anormales d'une vanne d'arrêt, comprenant une vanne d'arrêt (SDV 1) dotée d'un tuyau d'entrée (5), d'un tuyau de sortie (6), d'un élément de régulation de débit (2) situé entre lesdits tuyaux d'entrée et de sortie, une tige (3) reliée à l'élément de régulation de débit (2) entraînée par un agencement actionneur (4),
le système comprenant en outre
un premier système de détection destiné à détecter le frottement de l'élément de régulation de débit (2), comprenant un premier prédicteur (20) relié à la tige (3), avec un capteur d'accéléromètre (26) détectant l'accélération de rotation de la tige (3) et un capteur de mouvement (25) détectant le mouvement de rotation de la tige (3), le premier prédicteur détectant la position de l'élément de régulation de débit (2) transférée à travers la tige (3), et
un second système de détection destiné à détecter une fuite dans l'élément de régulation de débit (2), comprenant un second prédicteur (40) pour détecter les vibrations dans l'élément de régulation de débit (2).

2. Système selon la revendication 1, le second prédicteur (40) étant relié au tuyau de sortie (6).

3. Système selon la revendication 1, le premier prédicteur (20) comprenant :
- un capteur de choc (27) détectant les mouvements de choc et/ou les vibrations ultrasoniques à travers la tige (3),
- un premier microcontrôleur (29) commandant les données de capteur provenant des capteurs (25, 26, 27), et
- une première interface sans fil (30) envoyant des données provenant dudit premier microcontrôleur (29).

4. Système selon la revendication 1, le second prédicteur (40) comprenant :
- un capteur de température (48) détectant la température dans l'écoulement de fluide, et/ou
- un second capteur de choc (47) détectant les mouvements de choc et/ou les vibrations ultrasoniques dans le tuyau de sortie (6), et/ou
- un second capteur de vibrations (46) détectant les vibrations de l'élément de régulation de débit (2), et/ou
- un second microcontrôleur (49) commandant les données de capteur provenant des capteurs (41, 46, 47, 48), et
- une seconde interface sans fil (50) envoyant des données émises par ledit second microcontrôleur (49).

5. Système selon la revendication 1, comprenant en outre un capteur à jauge de contrainte (11) détectant la force dynamique induite sur la tige (3).

6. Système selon la revendication 1, comprenant en outre un capteur de pression d'actionneur (12) détectant la pression hydraulique dans l'actionneur (4) lorsqu'il fonctionne.

7. Système selon la revendication 1, comprenant en outre un capteur à jauge de contrainte (41), fixé à l'aide d'un élément de fixation (42) sur la paroi dudit tuyau de sortie, détectant la contrainte dans l'élément de fixation proportionnellement à la pression.

8. Système selon la revendication 1, comprenant en outre un second capteur de pression (43) situé du côté sortie de l'élément de régulation de débit (2) détectant la pression de fluide dans le tuyau de sortie.

9. Procédé de détection de conditions de fonctionnement anormales dans le système selon les revendications 1 à 8, comprenant les étapes consistant à :
- détecter le frottement de l'élément de régulation de débit (2) en détectant la position de l'élément de régulation de débit (2) transférée à travers la tige (3), le premier prédicteur comprenant un capteur d'accéléromètre (26) détectant l'accélération de rotation de la tige (3) ainsi que le capteur de mouvement (25) détectant le mouvement de rotation de la tige (3), et
- détecter une fuite dans l'élément de régulation de débit (2) en détectant les vibrations dans l'élément de régulation de débit.

10. Procédé selon la revendication 9, le premier microcontrôleur (29) lisant les signaux de capteur (215) provenant dudit premier capteur de choc (27), dudit premier capteur d'accéléromètre (26), dudit premier capteur de mouvement (25), dudit capteur de pression d'actionneur (12) et dudit capteur de jauge de contrainte (11), calculant et comparant (216) les données de capteur pour détecter un éventuel frottement et/ou déviation du mouvement acceptable et envoyant lesdites données de capteur provenant dudit premier émetteur (30),
i. si la déviation de frottement (220) de l'élément de régulation de débit (2) est calculée, une alarme de frottement étant générée (223), et
ii. les données de déviation de frottement étant stockées (221) et/ou
iii. si aucune déviation de frottement (220) n'est calculée, et
la déviation de mouvement (230) de l'élément de régulation de débit (2) est calculée, une alarme de mouvement (232) étant générée et
iv. les données de déviation de mouvement étant stockées (231) et/ou
v. si aucune déviation de mouvement (230) n'est calculée, le système passant en mode veille (250).

11. Procédé selon la revendication 9, un signal de déclenchement d'actionneur (210) provenant dudit prédicteur (20) réveillant (212) le premier microcontrôleur (29).

12. Procédé selon la revendication 9, un temporisateur de réveil (211) étant conçu pour réveiller (212) le premier microcontrôleur (29).

13. Procédé selon la revendication 9, le premier microcontrôleur (29) du prédicteur (20) communiquant lesdites données de position de vanne (320) pour ledit élément de régulation de débit (2) au second microcontrôleur (49) :
i. si la position (320) de l'élément de régulation de débit (2) indique que la vanne est ouverte, les données étant stockées (321), ou
ii. si la position (320) de l'élément de régulation de débit (2) indique que la vanne est fermée, le second microcontrôleur lisant les données de capteur (323) provenant du capteur de température (48), dudit second capteur de choc (47), dudit second capteur de vibration (46), du capteur à jauge de contrainte (41), du second capteur de pression (43) qui mesure les données de fuite (325) et où lesdites données de fuite mesurées (325) sont calculées et corrélées avec des données de fuite prédéfinies (326) et
iv. le débit de fuite (331) étant estimé et
v. l'alarme de fuite (332) étant générée et
vi. les données étant stockées (321) et
vii. le système repassant en mode veille (250).

14. Procédé selon la revendication 13, un signal de capteur de choc (310) provenant d'un second capteur de choc (47) réveillant (312) le second microcontrôleur (49).

15. Procédé selon la revendication 13, le temporisateur de réveil (311) étant conçu pour réveiller le second microcontrôleur (49).
